# EUROPEAN PATENT APPLICATION

(11) **EP 2 410 818 A2**
(43) Date of publication of application: **25.01.2012**
(21) Application number: 10187108.5
(22) Date of filing: 11.10.2010
(51) Int. Cl.: H05B 33/08

(54) **Direct current driving circuit of a light emitting device**

(30) Priority: 21.07.2010 TW 099124053
(71) Applicant: Advanced Connectek Inc., Taipei Hsien Hsin-Tien (TW)
(72) Inventor: Yu, Chung-Hung, Taipei (TW); Chao, Ta-Wei, Taipei (TW)
(74) Representative: Lang, Christian

(57) **Abstract**

The invention provides a direct current driving circuit of a light emitting device for driving a plurality of light emitting devices. The direct current driving circuit of the light emitting device comprises a rectification unit, a constant current unit and a light emitting module. The rectification unit is configured to rectify an outside alternate current voltage to output a direct current voltage. The constant current unit is electrically connected to the rectification unit, and generates a direct current corresponding to the direct current voltage to drive the light emitting module. The light emitting module comprises a plurality of light emitting devices and at least one diode connected in serial, and the light emitting devices are respectively connected in parallel to voltage stabilizing capacitances. The driving circuit can provide a stabilized direct current load driving with high efficiency and high power factor.

## Description

### FIELD OF THE INVENTION

The present invention relates to a direct current driving circuit of a light emitting device, and particularly to a direct current load driving circuit utilizing a voltage stabilizing light emitting sub-unit independent circuits formed by a light emitting device and a voltage stabilizing capacitance as a highly efficient light emitting device.

### BACKGROUND

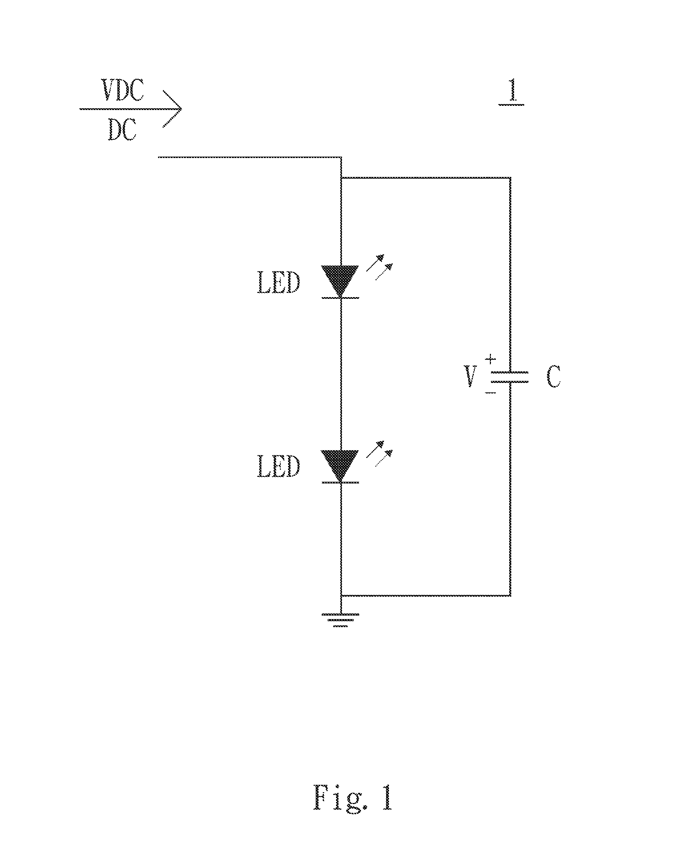

An example of a direct current driving circuit of a light emitting device in related arts is shown in Fig. 1. The driving circuit 1 receives a direct current DC for driving the light emitting device, and achieves voltage stabilization by a capacitance C in parallel.

However, driving a light emitting diode (LED) by the driving circuit 1 would lead to flashing or low power factor of the LED. Specifically, in the first half period, the capacitance C is charged by the direct current DC such that the capacitance C is charged to a voltage V corresponding to the direct current DC. In the next half period, the capacitance C has to wait until a direct current voltage VDC formed by the outside alternate current voltage is higher than the voltage V to be charged. Thus, the waiting leads to an increased charging time of the capacitance C, and during the waiting time the voltage V of the capacitance C drops by discharging to the LED. These factors induce an intensified change of the ripple on the capacitance C, and may lead to the LED flashing and even going off.

### SUMMARY OF THE INVENTION

An objective of the present invention is to provide a direct current driving circuit of a light emitting device in order to achieve stabilized light emitting device driving with high efficiency and high power factor.

A further objective of the present invention is to provide a direct current driving circuit of a light emitting device to independently provide a plurality of direct current load light emitting module, thus achieving stabilized direct current driving with high efficiency and high power factor.

To achieve the foregoing objectives of the invention, the invention provides a direct current driving circuit of a light emitting device, which comprises a rectification unit, a constant current unit and a light emitting module. The rectification unit has a voltage input terminal and a voltage output terminal, and is configured to rectify an outside alternate current voltage received from the voltage input terminal to output a direct current voltage. The constant current unit is electrically connected to the rectification unit, and generates a direct current corresponding to the direct current voltage. The light emitting module is electrically connected to the constant current unit, and comprises a plurality of light emitting devices and at least one diode connected in serial, and each of the light emitting devices is connected respectively in parallel to a voltage stabilizing capacitance. The light emitting devices can be solid-state light emitting devices, such as organic light emitting diodes (OLEDs), light emitting diodes (LEDs) or electroluminescent light emitting devices.

Comparing to the related arts, the direct current driving circuit of the light emitting device can avoid the conventional low power factor phenomenon due to unstable direct current driving. Furthermore, the present invention can achieve stabilized direct current load driving with high efficiency and provide high power factor.

### BRIEF DESCRIPTION OF THE DRAWINGS

Fig. 1 is a schematic view of a direct current driving circuit of a conventional light emitting device;

Fig. 2 is a schematic view of a direct current driving circuit of a light emitting device according to an embodiment of the invention;

Fig. 3 is a detailed view of the circuitry of the direct current driving circuit of the light emitting device in Fig. 2; and

Fig. 4 is a schematic view of a direct current driving circuit of a light emitting device according to another embodiment of the invention.

### DETAILED DESCRIPTION OF THE INVENTION

The techniques employed by the present invention to achieve the foregoing objectives and the effects thereof are described hereinafter by way of examples with reference to the accompanying drawings.

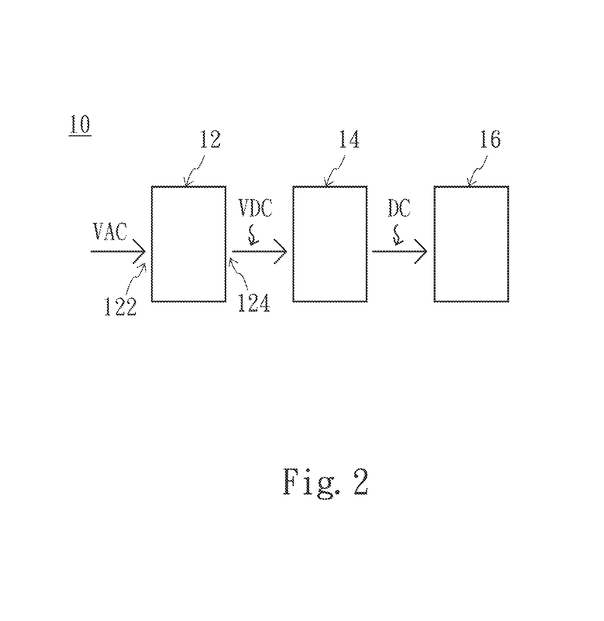

Referring to Fig. 2, which is a schematic view of a direct current driving circuit of a light emitting device according to an embodiment of the invention. In the embodiment, the direct current driving circuit 10 comprises a rectification unit 12, a constant current unit 14 and a light emitting module 16. The rectification unit 12 has a voltage input terminal 122 and a voltage output terminal 124, in which the voltage input terminal 122 is configured to receive an outside alternate current voltage VAC, and rectifies the outside alternate current voltage VAC to output a direct current voltage VDC by the voltage output terminal 124. More specifically, the alternate current voltage VAC having a sine wave with positive and negative half periods is rectified to the direct current voltage VDC having a full / half wave rectified sine wave. The rectification unit 12 can be a full-wave rectification unit or a half-wave rectification unit, and the full-wave rectification unit can be a bridge rectifier. The half-wave rectification unit rectifies the alternate current voltage VAC having a sine wave with positive and negative half periods to the direct current voltage VDC having a sine wave with only the positive half period. The full-wave rectification unit rectifies the alternate current voltage VAC having a sine wave with the amplitude of positive and negative half periods to the direct current voltage VDC having a sine wave with full amplitude of the positive half period. The constant current unit 14 is electrically connected to the voltage output terminal 124 of the rectification unit 12, and generates a direct current DC corresponding to the direct current voltage VDC. The light emitting module 16 is electrically connected to the constant current unit 14, and receives the direct current DC from the constant current unit 14 for driving the light emitting module 16.

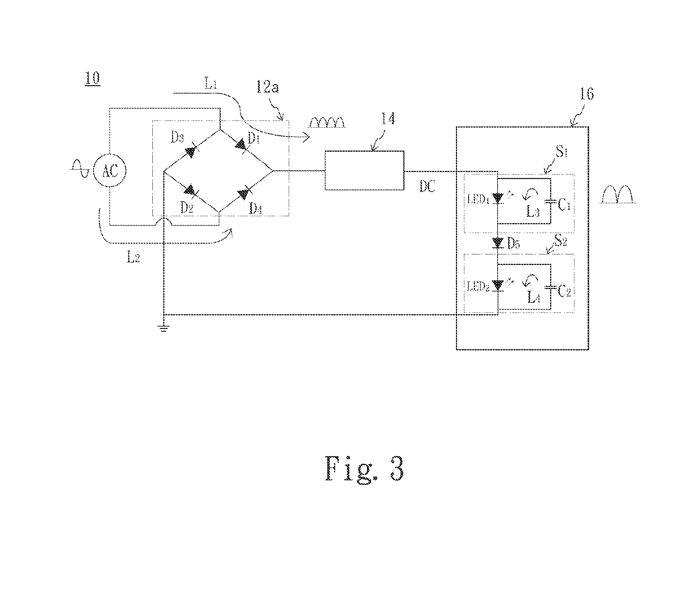

Referring to Fig. 3, which is a detailed view of the circuitry of the direct current driving circuit of the light emitting device in Fig. 2. In Fig. 3, the rectification unit 12 is shown as a bridge rectifier 12a, and the bridge rectifier 12a has four diodes D1-D4. According to the alternate current voltage VAC provided to the bridge rectifier 12a, the direct current voltage VDC is provided to the constant current unit 14 by a first direct current voltage circuit loop L1, formed by the diode D1 and the diode D2, and a second direct current voltage circuit loop L2, formed by the diode D3 and the diode D4. The constant current unit 14 then generates the direct current DC corresponding to the direct current voltage VDC. The light emitting module 16 receives the direct current DC from the constant current unit 14. The light emitting module 16 is formed by a plurality of light emitting sub-units and a diode, and in the embodiment, it includes a first light emitting sub-unit S1, a second light emitting sub-unit S2, and a diode D5. The first light emitting sub-unit S1, the diode D5 and the second light emitting sub-unit S2 are connected in serial sequentially, and one end of the second light emitting sub-unit S2 is connected to a grounding terminal.

The first light emitting sub-unit S1 has a first light emitting device LED1 and a first voltage stabilizing capacitance C1 connected in parallel to the first light emitting device LED 1, and the second light emitting sub-unit S1 has a second light emitting device LED2 and a second voltage stabilizing capacitance C2 connected in parallel to the second light emitting device LED2. The first light emitting sub-unit S1 and the second light emitting sub-unit S2 respectively have independent light emitting conduction loops L3 and L4. The first and the second light emitting devices LED1 and LED2 can be solid-state light emitting devices, such as organic light emitting diodes (OLEDs), light emitting diodes (LEDs) or electroluminescent light emitting devices. In this embodiment, LEDs are used as the examples.

According to the driving circuit of the invention, the voltage input to the light emitting module 16 is always lower than the voltage of the rectification unit 12a, and the direct current DC from the constant current unit 14 can be provided consistently to the light emitting module 16. Thus, the voltage stabilizing capacitances C1 and C2 can be charged stably and rapidly to reduce the ripple effect during the charging and discharging of the voltage stabilizing capacitances C1 and C2. Since the ripple has an ill effect on the power factor, the invention efficiently enhances the power factor without having any effect on the voltage stabilizing capacitances C1 and C2.

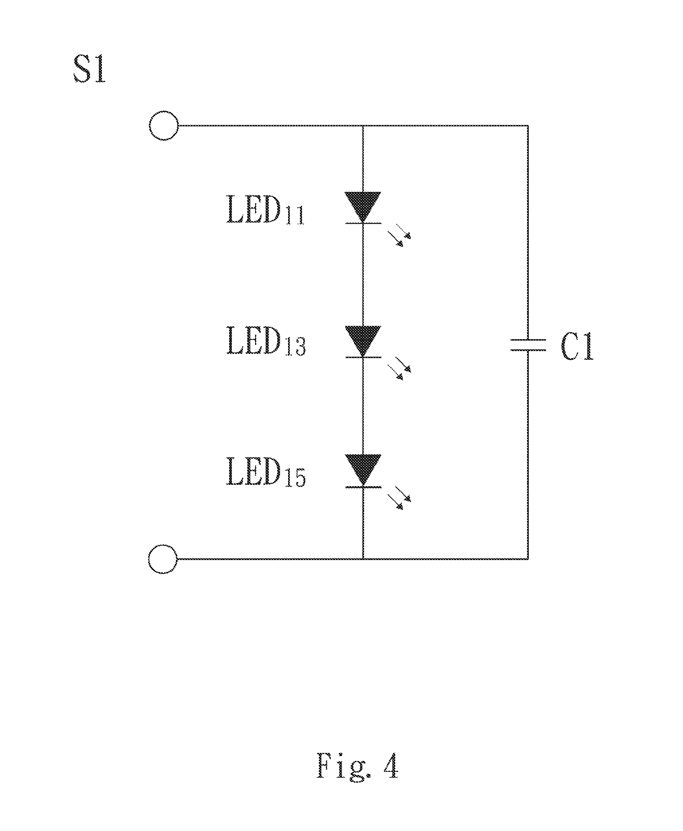

Referring to Fig. 4, which is a schematic view of a direct current driving circuit of a light emitting device according to another embodiment of the invention. The first light emitting sub-unit S1 can have a plurality of the first light emitting devices, such as the three first light emitting devices LED11, LED13 and LED15 connected in serial as shown in this embodiment. The first light emitting devices LED11, LED 13 and LED15 are then connected in parallel to the first voltage stabilizing capacitance C1. Thus, the light emission is enhanced by attaching a number of light emitting devices in series. Similarly, the second light emitting sub-unit S2 can have a plurality of the second light emitting devices connected in serial, and then connected in parallel to the second voltage stabilizing capacitance C2. Details of the connection are hereby omitted.

The preferred embodiments of the present invention have been disclosed in the examples. However, the examples should not be construed as a limitation on the actual applicable scope of the invention, and as such, all modifications and alterations without departing from the spirits of the invention and appended claims shall remain within the protected scope and claims of the invention.

## Claims

1. A direct current driving circuit (10) of a light emitting device, comprising:
a rectification unit (12) having a voltage input terminal (122) and a voltage output terminal (124), and configured to rectify an outside alternate current voltage (VAC) received from the voltage input terminal (122) to output a direct current voltage (VDC);
a constant current unit (14) electrically connected to the voltage output terminal (124), and generating a direct current corresponding to the direct current voltage (VDC); and
a light emitting module (16) comprising a first light emitting sub-unit (S1), a diode and a second light emitting sub-unit (S2) connected in serial sequentially,
wherein the first light emitting sub-unit (S1) comprises a first light emitting device (LED1) and a first voltage stabilizing capacitance (C1) connected in parallel to the first light emitting device (LED1), the second light emitting sub-unit (S2) comprises a second light emitting device (LED2) and a second voltage stabilizing capacitance (C2) connected in parallel to the second light emitting device (LED2), and one end of the second light emitting sub-unit (S2) is connected to a grounding terminal.

2. A direct current driving circuit (10) of a light emitting device according to claim 1, wherein the rectification unit (12) is a bridge rectifier (12a).

3. A direct current driving circuit (10) of a light emitting device according to claim 1, wherein the first light emitting device (LED1) and the second light emitting device (LED2) are solid-state light emitting devices.

4. A direct current driving circuit (10) of a light emitting device according to claim 3, wherein the solid-state light emitting devices are organic light emitting diodes (OLEDs), light emitting diodes (LEDs) or electroluminescent light emitting devices.

5. A direct current driving circuit (10) of a light emitting device according to claim 1, wherein the first light emitting sub-unit (S1) has a plurality of the first light emitting devices (LED1) connected in serial, and the first light emitting devices are connected in parallel to the first voltage stabilizing capacitance (C1).

6. A direct current driving circuit (10) of a light emitting device according to claim 1, wherein the second light emitting sub-unit (S2) has a plurality of the second light emitting devices (LED2) connected in serial, and the second light emitting devices are connected in parallel to the second voltage stabilizing capacitance (C2).
